(19) Europäisches Patentamt / European Patent Office / Office européen des brevets

(11) **EP 3 866 104 A1**

(12) **EUROPEAN PATENT APPLICATION**

(43) Date of publication:
**18.08.2021 Bulletin 2021/33**

(51) Int Cl.:
*G06T 1/00* (2006.01)

(21) Application number: **20156885.4**

(22) Date of filing: **12.02.2020**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN** | (71) Applicant: **Koninklijke Philips N.V.**<br>**5656 AG Eindhoven (NL)**<br><br>(72) Inventor: **VAREKAMP, Christiaan**<br>**5656 AE Eindhoven (NL)**<br><br>(74) Representative: **Philips Intellectual Property & Standards**<br>**High Tech Campus 5**<br>**5656 AE Eindhoven (NL)** |

(54) **A CAMERA SYSTEM WITH MULTIPLE CAMERAS**

(57) A camera system displays a view of an object to a user. Multiple cameras each capture an image and have an associated depth map. For a reference view, it is determined if the view of the object is obstructed or not. If the view is not obstructed, the reference view is displayed. If the view is obstructed, an image captured by a different camera is modified such that a region of interest in the modified image is aligned with the region of interest in the reference image, and the modified image is displayed. This enables automatic generation of an unobstructed view of the object.

FIG. 4

**Description**

FIELD OF THE INVENTION

The invention relates to camera systems with multiple cameras, and in particular which are for displaying a selected one of the camera images to a user.

BACKGROUND OF THE INVENTION

Multi-view camera systems are typically proposed or used to allow a viewer to look around objects. Depth is then measured or estimated to allow for a smooth transition between viewpoints or the extrapolation beyond captured viewpoints.

While such systems make it possible to look around objects, the viewer needs to do this actively, i.e. the viewer needs to change his own perspective to look around a foreground object to see an occluded region.

There are important use cases where this is undesirable and an automatic, clear view, would be desirable.

For example, a camera system may be used for observing a patient in an operating room. A multi-camera rig may be used, and the issue arises that hospital staff will be constantly obstructing the side views of the patient. For a remote observer that needs to see the patient, it would be desirable to have a clear view all the time.

The same issue arises for an expert performing a manual task with a camera system recording the procedure, for example for training, assessment, recording, monitoring or assistance purposes. During the implementation of the task, the hands of the user may obstruct the object of interest. This is undesirable for a remote assistant or trainee that would like to have a clear view of the object as well.

There is therefore a need for a system which enables a continuous unobstructed view of an object to be generated for display to a viewer of the display.

SUMMARY OF THE INVENTION

The invention is defined by the claims.

According to examples in accordance with an aspect of the invention, there is provided a camera system for displaying a view of an object to a user, comprising:

a plurality of cameras comprising a reference camera and one or more additional cameras, wherein each camera is adapted to capture an image;
a depth map generator for generating a depth map associated with each image;
a display; and
a processor for processing the images from the plurality of cameras and the depth maps,
wherein the processor is adapted to receive, for each camera:

first information relating to the depth of the object relative to the camera; and
second information relating to the location of the object within the field of view of the camera, defining a region of interest,

and wherein the processor is adapted to determine if the view of the object in the image of the reference camera is obstructed or not, and wherein:

if the view is determined not to be obstructed, the processor is adapted to control the display to output the image captured by the reference camera; and
if the view is determined to be obstructed, the processor is adapted to modify the image captured by one of the additional cameras such that the region of interest in the modified image is aligned with the region of interest in the image captured by the reference camera, and to display the modified image.

This camera system enables an unobstructed view of an object to be displayed, even when a view from a desired viewpoint (i.e. the image from the reference camera) becomes obstructed. The obstruction is typically that an object or person passes between the reference camera and the object. This may for example comprise a person walking around the general area, or the hands of the person performing a task (which is being viewed by others), or it may an object that is moved into the field of view of the reference camera.

The system avoids the need for complex reconstruction of an image as viewed from the location of the reference camera, when the reference camera is obstructed. Instead, an image from another camera is used. However, to avoid disturbing movement of the object within the displayed image resulting from the shifts in viewpoints, the image from the additional camera is modified at least to align the region of interest (i.e. the image of the object) from the selected additional camera with the region of interest from the reference camera.

The system is thus able to automatically produce a clear view of a given object of interest using the camera views.

The system may select a single additional view, but equally it may select (in real time) multiple unobstructed views of the object and use those to create an image for the object, more closely representing how the object would have been seen from the obstructed viewpoint.

Each depth map may comprise a low resolution depth map.

Since high resolution 3D image processing is not needed, only a low resolution depth map is needed.

Within each depth map, a constant depth value may be allocated to all pixels of the region of interest.

Thus, the object of interest is approximated as a planar object at a fixed depth. Thus, a global planar perspective projection may be applied.

The modification of the image for example then comprises a homography transformation.

This provides a most natural evolution of the part of the image in the region of interest from an image by the reference camera to an image by the selected additional camera. However, it enables a simple depth map and reduced processing compared to the generation of an accurate image of a 3D object from a new viewpoint.

The processor may be adapted to determine the average depth at the border of the region of interest, wherein the view is determined to become obstructed if the average depth decreases.

Thus, depth information is used to determine when a view becomes obstructed. This is a simple approach for example avoiding the need for object tracking or identification.

The view is for example determined to become obstructed if the average depth decreases by more than a depth change threshold. Thus changes (reductions) in depth are identified as being caused by moving interfering objects. There may additionally be time period thresholds, for example to avoid rapid switching between viewpoints.

If the view is determined to be obstructed, the processor is for example adapted to select the additional camera (of which the captured image is to be modified) based on the part of the border of the region of interest which caused the obstruction to be determined.

In this way, the direction from which an obstruction has arrived into the region of interest is determined, and this can be used to select a different view which is unlikely to be obstructed by the same obstruction.

The processor is for example adapted to receive a user selection of which camera is to be assigned as the reference camera. Thus, a user can select which camera view best meets their needs, in terms of the parts of the object that are clearly in view.

The processor is for example adapted:

to receive a user identification of the region of interest within a displayed view from the reference camera; or
to determine automatically the region of interest within a displayed view from the reference camera based on eye tracking.

Thus, the region of interest with the image from the (selected) reference camera may be selected manually or automatically. Once selected, the depth information for the object can be collected, and it can be assigned a common (e.g. average) value, as mentioned above.

The processor may be adapted to determine the region of interest in respect of the one or more additional cameras based on location of the region of interest within a displayed view from the reference camera.

Thus, by selecting a region of interest in respect of the reference camera, based on a known positional relationship between the cameras, the region of interest in images from the other cameras can be derived automatically.

Thus, the user only needs to identify the region of interest in one selected camera image.

The set of cameras for example comprises at least three cameras. Thus, there can be at least one additional camera to each side of the reference camera.

The invention also provides a patient monitoring system, comprising:

a camera system as defined above facing a patient bed.

The camera system may thus be used during treatment or surgery, for example for training purposes or for image recording purposes.

The invention also provides method for displaying a view of an object to a user, comprising:

receiving, for each of a plurality of cameras comprising a reference camera and one or more additional cameras:

first information relating to the depth of the object relative to the camera;
second information relating to the location of the object within the field of view of the camera, defining a region of interest;

capturing images from the plurality of cameras and obtaining depth maps in respect of the images;
determining if the view of the object in the image of the reference camera is obstructed or not, and wherein:

if the view is determined not to be obstructed, (62) displaying the image captured by the reference camera; and
if the view is determined to be obstructed, modifying (68) and displaying (70) the image captured by one of the additional cameras such that the region of interest in the modified image is aligned with the region of interest in the image captured by the reference camera.

The method may comprise allocating a same depth for all of the regions of interest for each respective camera, and wherein the modifying the image comprises applying a homography transformation.

The method may be implemented at least in part in software.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Figure 1 shows a multi-view camera configuration comprising a set of cameras imaging a scene containing an object of interest;
Figure 2 shows a second object entering the field of view of the reference camera;
Figure 3 shows a camera system for displaying a view of an object to a user; and
Figure 4 shows an image display method.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a camera system for displaying a view of an object to a user. Multiple cameras each capture an image and a depth map in respect of an image. For a reference view, it is determined if the view of the object is obstructed or not. If the view is not obstructed, the reference view is displayed. If the view is obstructed, an image captured by a different camera is modified such that a region of interest in the modified image is aligned with the region of interest in the reference image, and the modified image is displayed. This enables automatic generation of an unobstructed view of the object.

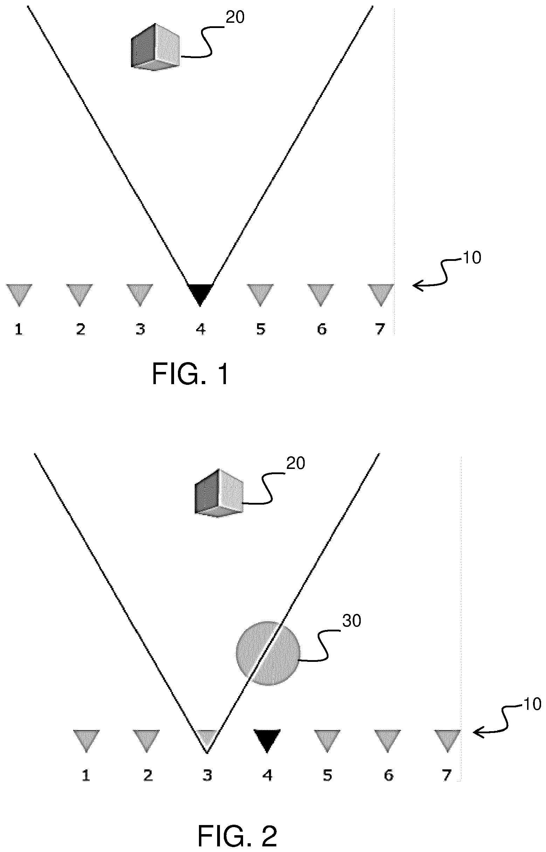

Figures 1 and 2 are used to explain the general approach.

Figure 1 shows a multi-view camera configuration comprising a set 10 of seven cameras imaging a scene containing an object of interest 20, in this example represented by a cube.

The active viewpoint may be considered to be a reference viewpoint and is that of camera number 4, which may be considered to be a reference camera. The image taken by the camera at that viewpoint may be shown to the observer.

The aim is to have the object of interest 20 visible at all times.

Figure 2 shows a second object 30 having entered the field of view of the reference camera, camera number 4. In particular, as seen from the viewpoint of the reference camera number 4, the object 30 will obstruct the image of the object 20. Before the object 20 is occluded, the system then automatically switches from showing the image of the reference camera to an image from a different camera at a different viewpoint, in this example camera number 3 as shown in Figure 2. This image from camera number 3 is however modified to take account of the change in viewpoint. This image modification is described in detail below.

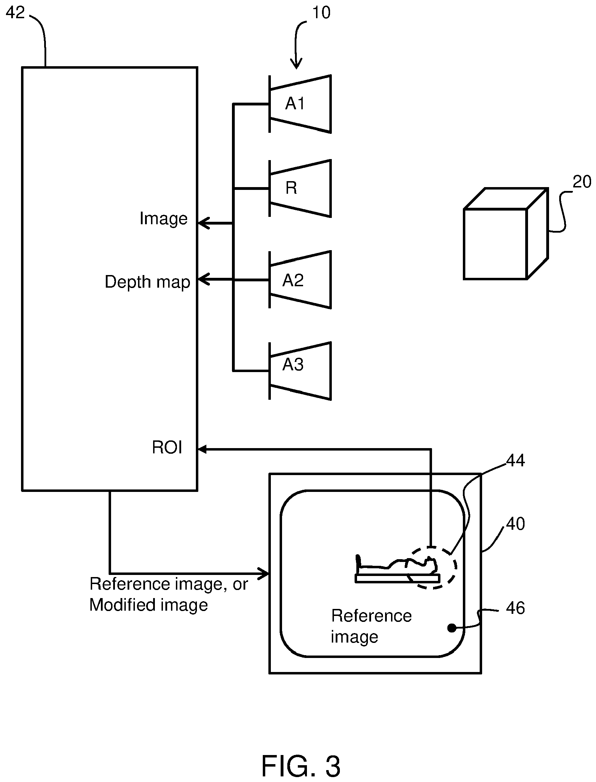

Figure 3 shows a camera system for displaying a view of an object to a user. The set 10 of a plurality of cameras comprises a reference camera R and one or more additional cameras A1 to A3.

Each camera captures an image of the scene from its respective viewpoint. Each image is associated with a depth map in respect of the image.

One option is for the camera to capture a depth map by incorporating a depth sensor. Alternatively, depth maps may be estimated after image capture, for example by using sub-sets of two images to estimate depth for a stereoscopic pair. In that way, a depth map can be produced via disparity estimation.

As an alternative there may be multiple separate depth camera sensors that use either a well-known structured light system or else a time-of-flight sensing principle. By knowing the position of these depth sensors relative to the normal cameras, a depth map can be associated with each normal camera viewpoint by warping from one or more of the multiple depth cameras.

All of these options are intended to be covered by the term "depth map generator". Thus, a depth map generator may receive depth information to generate a depth map, or it may create depth information from image data, and then generate a depth map.

A display 40 is provided for displaying a view to the user. A processor 42 is used to process the images and depth maps from the plurality of cameras.

The depth maps provide first information relating to the depth of the object relative to the camera. Second information is also provided to the processor, relating to the location of the object within the field of view of each camera, defining a region of interest 44.

At the start of a monitoring session, the user wishing to view the scene remotely selects a suitable one of the cameras as the reference camera, thereby defining a reference viewpoint. The user may then indicate the region of interest 44 in the corresponding image 46. This may be achieved using a touch screen or a mouse or any other suitable user interface.

Indication of the region of interest may optionally be done automatically by tracking the eye-gaze of the remote observer relative to the image on the display 40.

The aim is for this region 44 to remain visible as much as possible.

The processor 42 determines if the view of the object 20 in the image of the reference camera R is obstructed or not.

The depth map is used to determine obstruction.

Each depth map only needs to be in the form of a low resolution depth map for this purpose. In particular, the whole of the region of interest may be treated as a single depth region, so the depth map resolution only needs to be better that the size of the region of interest and not a full pixel-level depth map. Thus, a low resolution depth map may be one for which there are at least 10, for example at least 50, for example at least 100 depth measurements corresponding to a typical size of the region of interest.

Depth maps generally have a lower resolution than images. One reason for this is that the depth determination (stereo estimation or time-of-flight measurement or structured light analysis) is uncertain and cannot achieve the same angular resolution as a normal camera. The depth sensors or disparity estimators for example produce images that have a resolution which is a factor of at least 8 (e.g. typically 8 or 16) lower than the associated visual camera image (in each of the two dimensions). High resolution 3D image processing is not needed, so only a low resolution depth map is needed, in particular for occlusion sensing. As explained above, the depth maps may be estimated directly from the multiview images or they may be measured separately using depth sensors.

The depth values just outside the region of interest 44 in the active (e.g. reference) viewpoint are used to determine two things.

First, they are used to decide when to switch to another viewpoint. When the average depth at (or just outside) the border of the region of interest 44 reduces significantly from one moment to the next, obstruction is detected and another viewpoint is selected. For example, if the object of interest is at 3m from the camera, a decrease to 2m or less within 0.1s can trigger switching.

The view is for example determined to become obstructed if the average depth decreases by more than a depth change threshold (either an absolute value e.g. 30cm or a relative value e.g. 20%) and within a time period less than a time period threshold. Thus rapid changes (reductions) in depth are identified as being caused by moving interfering objects.

The image location at which the decrease in depth occurs relative to the region of interest 44 may be used to determine which alternative viewpoint (of one of the additional cameras A1 to A3) will be selected. For the example in Figures 1 and 2, the depth decrease occurs on the right side of the region of interest and hence the selected viewpoint will move to the left. The selection of the additional camera is in this way based on the part of the border of the region of interest which caused the obstruction to be determined.

It may be that after viewpoint switching, the occluding object moves back again. In this case, the occlusion danger has gone and the original viewpoint can be shown. The system therefore keeps track of the depth in all viewpoints and attempts to switch back automatically to the original viewpoint when possible.

Occlusion in the respect of the currently selected viewpoint is also monitored. Thus, viewpoint switching can take place whenever the currently displayed view is occluded.

The system may in fact keep track of all occlusions of all views at all times to provide additional information for viewpoint switching, so that switching from one viewpoint to another obstructed viewpoint (e.g. obstructed by another object) is prevented, rather than repeatedly switching viewpoint to search for an non-occluded view.

The system may even combine components from multiple images, to derive a new image rather than only selecting one alternative viewpoint.

As mentioned above, the image from the new viewpoint is modified before display. This is to implement global perspective correction. The viewpoint switching action will spatially move the region of interest within the image, since a different perspective of the scene is displayed to the user. This effect may be more disturbing with larger position difference and rotation angles between cameras. To decrease this effect, the processor 42 modifies the image captured by the additional camera such that the region of interest in the modified image is aligned with the region of interest in the image captured by the reference camera. The modified image is then displayed.

The system avoids the need for complex pixel-accurate reconstruction of an image as viewed from the location of the reference camera (when the reference camera is obstructed). Instead, an image from another camera is warped to the reference viewpoint, preferably using a plane perspective mapping, where the plane has a depth that corresponds with the depth of the object of interest. Thus, within each each depth map, a constant depth value is allocated to all pixels in the region of interest and the object of interest is approximated as a planar object at a fixed (nominal) depth. Hence, information of the depth maps is used but in a conservative manner to avoid the creation of rendering/warping artefacts that otherwise arise due to noise in the depth maps. Using the plane perspective mapping avoids disturbing movement of the object within the displayed image.

The newly selected viewpoint is then projected to the originally selected viewpoint. The planar projection avoids severe object distortions and is in this case preferred over more general depth-image based rendering. The nominal depth is not accurate/correct because it assumes that the entire image is a 3D plane. Thus, it will introduce incorrect perceived motions. However, it will stabilize the object of interest and will avoid introducing rendering artefacts from depth errors.

The projection of the image (i.e. the modification) for example comprises a homography transformation. This transformation is explained below.

Let $z_1(u_1, v_1)$ denote the depth in the perspective image as a function of image pixel coordinates of camera 1 (which is to be mapped to the reference camera viewpoint). As a first step all pixels in the region of interest may be translated from image coordinates of camera 1 to the Euclidean coordinate of the camera 1 frame, essentially performing unprojection:

$$s \begin{bmatrix} x_1 \\ y_1 \\ z_1 \\ 1 \end{bmatrix} = Q_1 \begin{bmatrix} u_1 \\ v_1 \\ 1/z_1 \\ 1 \end{bmatrix}$$

where $Q_1$ is the 4x4 re-projection matrix. Assuming that the cameras are mutually calibrated, the coordinates in camera 1 can be transformed to to coordinates in the reference camera using:

$$t \begin{bmatrix} x_{\text{ref}} \\ y_{\text{ref}} \\ z_{\text{ref}} \\ 1 \end{bmatrix} = T \begin{bmatrix} x_1 \\ y_1 \\ z_1 \\ 1 \end{bmatrix}$$

where 4x4 transform matrix $T$ describes how coordinates in camera system 1 must be rotated and translated to arrive in the coordinates of the reference system. Finally, projection to the reference image may be performed using 3x4 projection matrix $P$:

$$w \begin{bmatrix} u_{\text{ref}} \\ v_{\text{ref}} \\ 1 \end{bmatrix} = P \begin{bmatrix} x_{\text{ref}} \\ y_{\text{ref}} \\ z_{\text{ref}} \\ 1 \end{bmatrix}.$$

The above equations are all linear. All matrices can therefore be condensed into a single 3x4 matrix that takes the image of camera 1 and warps is to the reference camera viewpoint assuming a known rotation and translation between both cameras. If it is assumed that $z_1$ is constant over the region of interest, i.e. having a constant value, the texture will be shifted and rotated according to a planar perspective mapping. Standard graphics libraries are able to perform operations of the above equations very efficiently on a graphical processing unit.

This process provides a natural evolution of the part of the image in the region of interest from an image by the reference camera to an image by the additional camera. However, it enables a simple depth map and reduced processing compared to the generation of an accurate image of a 3D object from a new viewpoint.

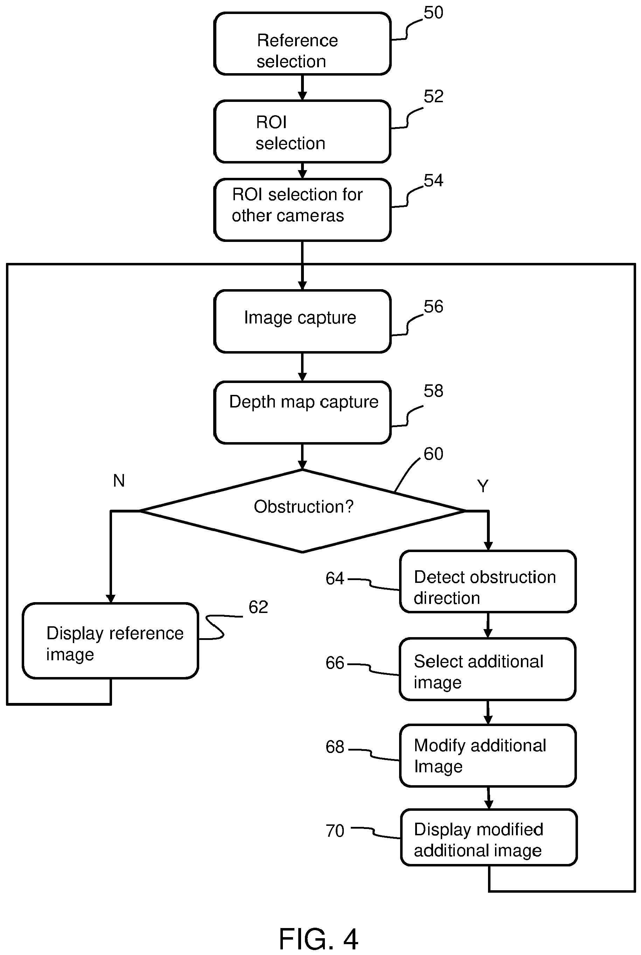

Figure 4 shows an image display method.

In step 50, a user selects a reference viewpoint., i.e. a reference camera of the set of cameras. The user selection, of which camera is to be assigned as the reference camera, is provided to the processor.

In step 52, the user makes an identification of the region of interest within a displayed view from the reference camera. However, this identification may instead be made automatically based on eye tracking.

In step 54, the processor determines the region of interest in respect of the one or more additional cameras based on the location of the region of interest within the displayed view from the reference camera. Thus, by selecting (or automatically identifying) a region of interest in respect of the reference camera, based on a known positional relationship between the cameras, the region of interest in images from the other cameras can be derived automatically. In particular, the region of interest in the reference view can be warped to a neighbor view using the assumed planar depth in the region of interest of the reference view. This identifies where the region of interest lies in a neighbor view.

In step 56, images are captured from all cameras and in step 58 depth maps are obtained (i.e. generated or captured) for all cameras (e.g. from separate depth sensors or via disparity estimation using the cameras). A constant depth is then allocated for all of the region of interest for each respective camera. Note that depending on the position and orientation of each camera, this constant depth value will vary from one camera to another. For instance, one camera may be positioned closer to the object of interest than another.

In step 60, it is determined if view of the object in the image of the reference camera is obstructed or not, based on depth information as explained above.

If the view is determined not to be obstructed, the image captured by the reference camera is displayed in step 62.

If the view is determined to be obstructed, the direction in which the obstruction arrived is detected in step 64.

The most suitable image from an additional camera is then selected in step 66. This may also take account of obstruction information obtained for all the cameras of the set.

In step 68, the image captured by the selected one of the additional cameras is modified such that the region of interest in the modified image is aligned with the region of interest in the image captured by the reference camera. Modifying the image for example comprises applying a homography transformation.

The modified image is displayed in step 70.

As shown by the return paths, the method continuously captures and analyzes images from the cameras.

Although not shown in Figure 4, it will be understood from the discussion above that the method may progress from the reference image to a first additional image and then to a second additional image before returning to the reference image.

The method is also shown as only switching to a selected one of the additional images. It may however involve combining multiple additional images when the reference image is obstructed. One scenario in which multiple images may be combined is when there does not exist a single other viewpoint that gives an unobstructed view for the entire region of interest. Warping multiple views may fill the target region of interest. To avoid so called stitched artefacts, a graphical indication (e.g. a green line) may be used to indicate that data from both sides of the line originate from different cameras. In this way, it is avoided that an expert interprets the image in the region across the dividing line.

The invention may be applied in any situation where a clear view of an object (such as a person or an item of equipment or a region of the body undergoing surgery, etc.) is desired to viewed or recorded continuously without obstruction.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems. (optional)

If the term "adapted to" is used in the claims or description, it is noted the term "adapted to" is intended to be equivalent to the term "configured to".

Any reference signs in the claims should not be construed as limiting the scope.

## Claims

1. A camera system for displaying a view of an object to a user, comprising:

   a plurality (10) of cameras comprising a reference camera and one or more additional cameras, wherein each camera is adapted to capture an image;
   a depth map generator for generating a depth map associated with each image;
   a display (40); and
   a processor (42) for processing the images from the plurality of cameras and the depth maps, wherein the processor is adapted to receive, for each camera:

   first information relating to the depth of the object relative to the camera; and
   second information relating to the location of the object within the field of view of the camera, defining a region of interest,

   and wherein the processor is adapted to determine if the view of the object in the image of the reference camera is obstructed or not, and wherein:

   if the view is determined not to be obstructed, the processor is adapted to control the display to output the image captured by the reference camera; and
   if the view is determined to be obstructed, the processor is adapted to modify the image captured by one of the additional cameras such that the region of interest in the modified image is aligned with the region of interest in the image captured by the reference camera, and to display the modified image.

2. The camera system as claimed in claim 1, wherein each depth map is a low resolution depth map.

3. The camera system as claimed in claim 1 or 2, wherein within each each depth map, a constant depth value is allocated to all pixels in the region of interest.

4. The camera system as claimed in claim 3, wherein the modification of the image comprises a homography transformation.

5. The camera system as claimed in any one of claims 1 to 4, wherein the processor is adapted to determine the average depth at the border of the region of interest, wherein the view is determined to become obstructed if the average depth decreases.

6. The camera system as claimed in claim 5, wherein the view is determined to become obstructed if the average depth decreases by more than a depth change threshold.

7. The camera system as claimed in any one of claims 1 to 6, wherein if the view is determined to be obstructed, the processor is adapted to select the additional camera of which the captured image is to be modified based on the part of the border of the region of interest which caused the obstruction to be determined.

8. The camera system as claimed in any one of claims 1 to 7, wherein the processor is adapted to receive a user selection of which camera is to be assigned as the reference camera.

9. The camera system as claimed in any one of claims 1 to 8, wherein the processor is adapted:

   to receive a user identification of the region of interest within a displayed view from the reference camera; or
   to determine automatically the region of interest within a displayed view from the reference camera based on eye tracking.

10. The camera system as claimed in any one of claims 1 to 9, wherein the processor is adapted to determine the region of interest in respect of the one or more additional cameras based on location of the region of interest within a displayed view from the reference camera.

11. The camera system as claimed in any one of claims 1 to 10, wherein the set of cameras comprises at least three cameras.

12. A patient monitoring system, comprising:
    a camera system as claimed in any one of claims 1 to 11 facing a patient bed.

13. A method for displaying a view of an object to a user, comprising:

    receiving, for each of a plurality of cameras comprising a reference camera and one or more additional cameras:

    first information relating to the depth of the object relative to the camera;
    second information relating to the location of the object within the field of view of the camera, defining a region of interest;

    (56, 58) capturing images from the plurality of cameras and obtaining depth maps in respect of the images;
    (60) determining if the view of the object in the image of the reference camera is obstructed or not, and wherein:

    if the view is determined not to be obstructed, (62) displaying the image captured by the reference camera; and
    if the view is determined to be obstructed, modifying (68) and displaying (70) the image captured by one of the additional cameras such that the region of interest in the modified image is aligned with the region of interest in the image captured by the reference camera.

14. The method as claimed in claim 13, comprising allocating a constant depth to all pixels in the region of interest for each respective camera, and wherein the modifying the image comprises a applying a homography transformation.

15. A computer program comprising computer program code means which is adapted, when said program is run on computer, to implement the method of claims 13 or 14.

FIG. 1

FIG. 2

FIG. 3

FIG. 4

Europäisches
Patentamt

European
Patent Office

Office européen
des brevets

# EUROPEAN SEARCH REPORT

Application Number

EP 20 15 6885

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CAI Q ET AL: "AUTOMATIC TRACKING OF HUMAN MOTION IN INDOOR SCENES ACROSS MULTIPLE SYNCHRONIZED VIDEO STREAMS", 6TH INTERNATIONAL CONFERENCE ON COMPUTER VISION. BOMBAY, JAN. 4 - 7, 1998; IEEE, US, 4 January 1998 (1998-01-04), pages 356-362, XP000883789, * page 358, right-hand column, paragraph 2 * * page 359, right-hand column, paragraph 2 * | 1-15 | INV. G06T1/00 |
| Y | MEHTA SACHIN ET AL: "Region graph based method for multi-object detection and tracking using depth cameras", IEEE WINTER CONFERENCE ON APPLICATIONS OF COMPUTER VISION, IEEE, 7 March 2016 (2016-03-07), pages 1-8, XP032904257, [retrieved on 2016-05-23] * page 2, left-hand column, paragraph 4 - page 3, right-hand column, last paragraph * | 1-15 | |
| A | LEE L ET AL: "MONITORING ACTIVITIES FROM MULTIPLE VIDEO STREAMS: ESTABLISHING A COMMON COORDINATE FRAME", IEEE TRANSACTIONS ON PATTERN ANALYSIS AND MACHINE INTELLIGENCE, IEEE COMPUTER SOCIETY, USA, vol. 22, no. 8, 1 August 2000 (2000-08-01), pages 758-767, XP000976483, * page 760, left-hand column, last paragraph * | 1-15 | |

TECHNICAL FIELDS
SEARCHED (IPC)

G06T

-/--

The present search report has been drawn up for all claims

| Place of search | Date of completion of the search | Examiner |
|---|---|---|
| Munich | 23 June 2020 | Pierfederici, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 20 15 6885

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TING-HSUN CHANG ET AL: "Tracking multiple people with a multi-camera system", MULTI-OBJECT TRACKING, IEEE WORKSHOP ON, JULY 8, 2001, IEEE, PISCATAWAY, NJ, USA, 1 January 2001 (2001-01-01), pages 19-26, XP010554350, * page 19, left-hand column, paragraph 1 - right-hand column, paragraph 2 * | 1-15 | |
| A | US 8 456 518 B2 (PACE VINCENT [US]; CAMPBELL PATRICK [US] ET AL.) 4 June 2013 (2013-06-04) * claims 1, 3 * | 1-15 | |

TECHNICAL FIELDS
SEARCHED     (IPC)

The present search report has been drawn up for all claims

| Place of search | Date of completion of the search | Examiner |
|---|---|---|
| Munich | 23 June 2020 | Pierfederici, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ............................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 15 6885

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2020

| Patent document cited in search report | Publication date | Patent family member(s) | Publication date |
|---|---|---|---|
| US 8456518 B2 | 04-06-2013 | US 2011242286 A1 | 06-10-2011 |
| | | WO 2011123698 A1 | 06-10-2011 |

EPO FORM P0459

For more details about this annex : see Official Journal of the European Patent Office, No. 12/82